# EUROPÄISCHE PATENTANMELDUNG

(11) **EP 1 923 649 A2**
(43) Veröffentlichungstag der Anmeldung: **21.05.2008**
(21) Anmeldenummer: 07018626.7
(22) Anmeldetag: 21.09.2007
(51) Int. Cl.: F26B 21/08

(54) **Verfahren zur Trocknung eines Trockengutes sowie Anlage zur Durchführung des Verfahrens**

(30) Priorität: 20.11.2006 DE 102006054543
(71) Anmelder: Alfons Tschritter GmbH, 97903 Collenberg (DE)
(72) Erfinder: Tschritter, Jens, 69120 Heidelberg (DE); Tschritter, Thorsten, 97909 Stadtprozelten (DE)
(74) Vertreter: Hano, Christian

(57) **Zusammenfassung**

Bei dem Verfahren zur Trocknung eines Trockenguts, wird getrocknete Luft durch das Trocknungsgut geleitet, wodurch dem Trockengut Feuchtigkeit entzogen wird, die von der durchgeleiteten Luft aufgenommen wird. Die durchgeleitete Luft wird einer Trocknungseinrichtung (34, 36) zugeführt und von dieser getrocknet. Die von der Trocknungseinrichtung (34, 36) getrocknete Luft wird wieder dem Trocknungsgut zugeführt und durch dieses geleitet. Die Feuchtigkeit der dem Trocknungsgut zugeführten Luft wird auf einen vorgegeben Sollwert geregelt. Ein Teil der der Trocknungseinrichtung (34, 36) zugeführten Luft wird abgezweigt und an der Trocknungseinrichtung (34, 36) vorbei geführt und anschließend wieder mit der durch die Trocknungseinrichtung (34, 36) getrockneten Luft vereint, wobei zur Regelung der Feuchtigkeit der dem Trocknungsgut zugeführten Luft, der Strömungsdurchsatz der abgezweigten Luft gesteuert wird. Hierdurch wird es zum einen ermöglicht, die Luftfeuchte auf einem einstellbaren Feuchteniveau möglichst konstant zu halten, und zum anderen eine maximale Standzeit der Trocknungseinrichtungen (34, 36) zu erreichen, um eine möglichst hohe Energieeffizienz zu erhalten.

## Beschreibung

Die Erfindung betrifft ein Verfahren zur Trocknung eines Trockengutes mit den Merkmalen des Oberbegriffs des Patentanspruchs 1 sowie eine Anlage zur Durchführung dieses Verfahrens.

Bei der Trocknung von Schüttgütern wie z. B. Kunststoffgranulaten und Kunststoffpulver (im Folgenden Granulat, bzw. Material genannt) ist die gleichmäßige Trocknung des Trockengutes ein wesentliches Qualitätsmerkmal. Die Maßhaltigkeit und mechanischen Eigenschaften der hergestellten Kunststoffteile hängen u. a. hiervon ab.

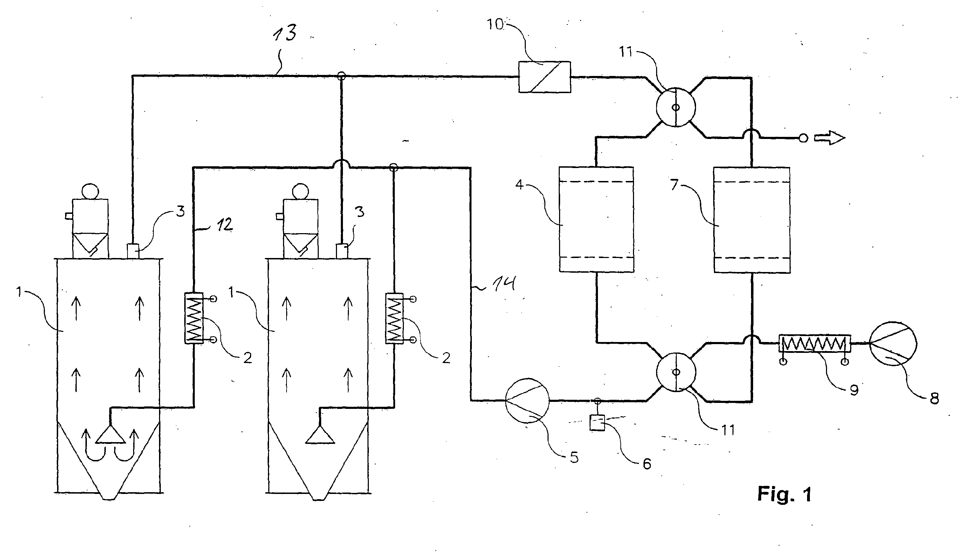

In Fig. 1 schematisch der Aufbau einer bekannten Trocknungsanlage zur Trocknung von Granulat gezeigt. Grundsätzlich lässt sich die Granulattrocknung mit einer solchen Anlage in zwei Luftkreisläufen durchführen.

In einem Prozesskreis wird ein oder mehrere mit Material gefüllte Behälter 1 mit einem Trockenluftstrom aus einer Rücklaufleitung 12 beschickt. Die Trockenluft wird von einer an der Rücklaufleitung 12 angeordneten Heizung 2 auf eine vom Material abhängige Trocknungstemperatur erhitzt und durchströmt den Behälter 1 von unten nach oben. Im Verlauf der Durchströmung überträgt die Trockenluft Wärme auf das Trockengut, nimmt Feuchtigkeit von dem Trockengut auf und transportiert diese Feuchtigkeit nach oben aus dem Behälter über einen Austritt 3 hinaus in eine Zulaufleitung 13. Von der Zulaufleitung 13 strömt die mit Feuchte beladene Luft durch eine mit Trockenmittel (Silokagel oder Zeolithe) gefüllte Patrone 4, wobei das Trockenmittel in der Patrone 4 dem Luftstrom Feuchtigkeit entzieht und sie dadurch entfeuchtet. Abhängig von der Lufttemperatur durchströmt die Luft vor Eintritt in die Trockenpatrone 4 eine Kühleinrichtung 10, durch die Luft abgekühlt wird, damit das Trockenmittel genügend Feuchte aus der Luft entziehen kann.

Ein in einer Rücklaufleitung 14 angeordnetes Trockengebläse 5 saugt die Luft in der Trockenmittelpatrone 4 an und bläst sie wieder in Richtung des Behälters 1 aus. Im Laufe des Trocknungsprozesses wird somit das Trockenmittel mit Feuchte beladen. Mit zunehmender Feuchtebeladung sinkt jedoch die der Luftströmung entzogene Feuchtemenge und die aus der Patrone 4 ausströmende Luft wird nicht mehr so stark getrocknet. Vor dem Trockengebläse 5 ist an der Rücklaufleitung 14 ein Feuchtesensor 6 angeordnet, der ermittelt, ob die entfeuchtete Luft noch trocken genug ist, um dem Granulat Feuchtigkeit zu entziehen. Sobald ein Feuchtigkeitsschwellwert überschritten ist, wird der Prozessluftkreis durch zwei Umschaltvorrichtungen 11 auf eine regenerierte Trockenpatrone 7 umgeschaltet und der Trocknungsprozess wird mit der Patrone 7 weiter fortgesetzt. Nun wird eine Regeneration der Patrone 4 durchgeführt. Hierzu saugt ein Regenerationsgebläse 8 Luft an, erhitzt diese mittels einer Regenrationsheizung 9 und durchbläst die Trockenmittelpatrone 4 mit der erhitzten Luft. Die Regenerationstemperatur richtet sich nach dem gewählten Trocknungsmittel. Das Trocknungsmittel wird hierdurch erhitzt und die Feuchtigkeit aus der Patrone 4 ausgetrieben. Nach Herunterkühlen der Patrone 4 ist die Regeneration beendet und die Patrone 4 bleibt in Wartestellung, bis die Patrone 7 soweit mit Feuchtigkeit beladen ist, bis wieder eine Umschaltung erforderlich ist.

Durch dieses Verfahren wird zwar ein Dauerbetrieb mit getrockneter Luft sichergestellt, jedoch schwankt der Trocknungsgrad der entfeuchteten Luft dauerhaft in einer sägezahnartigen Kurve. Sobald eine regenerierte Trockenpatrone in den Prozess eingeschaltet wird, entzieht sie der durchströmenden Luft sehr viel Feuchtigkeit. Im Laufe der Sättigung nimmt Feuchteentzug jedoch ab, bis die entsprechende Patrone schließlich nach Unterschreiten des Feuchteschwellwertes umgeschaltet werden muss.

Die systembedingte und zyklisch auftretende Feuchtezunahme der Prozessluft führt zu einem schwankenden Trocknungsgrad des Granulats, der in der Regel unerwünscht ist. Bei der Verarbeitung des Trockengutes sollen meist konstante Feuchtegrade erzeugt werden, um die Produktqualität der hergestellten Kunststoffteile konstant zu halten.

Aus diesem Grund wird daher meist der Feuchteumschaltpunkt möglichst nahe der gewünschten Luftfeuchte (bzw. Taupunkt) eingestellt. Die Sägezahncharakteristik des Feuchtegehalts der Trockenluft wird hierdurch zwar nicht geändert, die Schwankungshöhe nimmt aber ab. Stattdessen wird die Regeneration häufiger durchgeführt. Die Regeneration ist aber wegen der benötigten hohen Temperaturen sehr energieaufwändig, was wiederum unerwünscht ist.

Der Erfindung liegt daher die Aufgabe zugrunde, ein Verfahren zur Trocknung eines Trockengutes sowie eine Anlage zur Durchführung des Verfahrens zu schaffen, mit denen es möglich ist, zum einen die Luftfeuchte auf einem einstellbaren Feuchteniveau möglichst konstant zu halten, und zum anderen eine maximale Standzeit der Trocknungseinrichtungen zu erreichen, um eine möglichst hohe Energieeffizienz zu erhalten.

Diese Aufgabe wird durch ein Verfahren mit den Maßnahmen des Anspruchs 1 gelöst. Vorteilhafte Ausführungsarten des erfindungsgemäßen Verfahrens sind Gegenstand der Patentansprüche 2 bis 7.

Eine Anlage zur Durchführung des erfindungsgemäßen Verfahrens ist Gegenstand des Anspruchs 8. Bevorzugte Ausführungsformen der erfindungsgemäßen Anlage sind Gegenstand der Ansprüche 9 bis 14.

Bei dem erfindungsgemäßen Verfahren wird ein Teil der der Trocknungseinrichtung zugeführten Luft abgezweigt und an der Trocknungseinrichtung vorbei geführt und anschließend wieder mit der durch die Trocknungseinrichtung getrockneten Luft vereint, wobei zur Regelung der Feuchtigkeit der dem Trocknungsgut zugeführten Luft, der Strömungsdurchsatz der abgezweigten Luft gesteuert wird. Die Feuchtigkeit der dem Trocknungsgut zugeführten Luft wird auf einen vorgegebenen Sollwert geregelt. d. h. dass die dem Trocknungsgut zugeführte Luft einen Feuchtigkeitsgrad aufweist, der für eine Trocknung des Trocknungsgutes und für eine maximale. Standzeit der Trocknungseinrichtung optimal ist.

Die dem Trocknungsgut zugeführte Luft kann durch eine Kühleinrichtung gekühlt werden, damit die Temperatur der Luft für deren Trocknung in der Trocknungseinrichtung optimal eingestellt werden kann.

Als Kühleinrichtung kann ein Wasserkühler verwendet werden, bei dem zur Einstellung der Lufttemperatur die pro Zeiteinheit durchfließende Wassermenge verstellt wird. Dies kann entweder durch ein Proportionalventil oder durch getaktes Öffnen eines Wasserventils erfolgen. Es können aber auch andere verstellbare Kühlertypen wie Kältemaschinen oder Wärmetauscher eingesetzt werden.

Wenn sehr heiße Luft zur Trocknung des Trocknungsgutes verwendet wird, ist es vorteilhaft, den abgezweigten Teil der der Trocknungseinrichtung zugeführten Luft stromaufwärts der Kühleinrichtung abzuzweigen. Die Kühleinrichtung muss in diesem Fall weniger Luft auf die für deren Trocknung in der Trocknungseinrichtung optimale Temperatur kühlen, wodurch der Wirkungsgrad erhöht wird.

In diesem Fall ist es besonders zweckmäßig nach der Vereinigung der vorbei geführten und der getrockneten Luft eine Messbypassleitung vorzusehen, an der in Strömungsrichtung nacheinander eine Vorkühleinrichtung und die Messeinrichtung zur Messung der Feuchtigkeit vorgesehen sind. Dies ermöglicht es, die der Messeinrichtung zugeführte Luft zu kühlen, so dass die Messeinrichtung einwandfrei funktionieren kann.

Wenn die Temperatur der zur Trocknung des Trocknungsgutes verwendeten Luft vergleichsweise niedrig ist, kann der abgezweigte Teil der der Trocknungseinrichtung zugeführten Luft stromabwärts der Kühleinrichtung abgezweigt werden.

Bei einer Variante einer Ausführungsform mit Kühleinrichtung kann die Lufttemperatur der durch die Kühleinrichtung gekühlten Luft gemessen werden und die Kühlleistung der Kühleinrichtung abhängig von der gemessenen Lufttemperatur gesteuert werden.

Bei bestimmten Trockengütern kann es optimal sein, die Feuchtigkeit der dem Trocknungsgut zugeführten Luft an den Trocknungsverlauf anzupassen. Dies ist mit dem erfindungsgemäßen Verfahren möglich.

Es ist vorteilhaft, beim Durchlaufen des Trocknungszyklus den zeitlichen Zusammenhang zwischen Steuerwerten und Luftfeuchte zu ermitteln und als Parameter zu speichern. Hierdurch kann z. B. bei Wechsel einer Trockenmittelpatrone sofort der optimale Wert aus dem letzten Zyklus anfahren werden. Die Regelung übernimmt dann die feineren Korrekturen und die langsameren Anpassungen.

Für den Fall, dass der Feuchtesensor defekt sein sollte, kann der Trocknungsprozess über die gespeicherten Parameter als Notfall betrieben zeitgesteuert weiterlaufen.

Zusammengefasst bringt das erfindungsgemäße Verfahren folgende Vorteile mit sich:
- Die Trocknung des Trockengutes erfolgt bei gleichbleibender Feuchte der Trockenluft.
- Die Feuchtebeladung des Trockengutes wird ausgeglichen. Auch bei schwankenden Feuchtegehalten des Materials, z. B. bei Chargenwechsel, wird das Material gleichbleibend getrocknet. Speziell bei langen Trocknungszeiten macht sich dies durch einen gleichbleibenden Diffusionsdruck bemerkbar.
- Die zur Regeneration eingesetzte Energie wird optimal ausgenutzt, da keine Luft unnötigerweise getrocknet wird.
- Durch die verlängerte Standzeit der Trockenmittelpatronen wird Energie eingespart.
- Die Regenerationsfrequenz wird verringert, wodurch auch die hitzebedingte Degeneration des Trockenmittels und ein Verschleiß an Strömungswechslern zum Umschalten zwischen den Trockenmittelpatronen vermindert werden.
- Bei einem Einsatz von Kühleinrichtungen wird Energie bzw. Wasser eingespart, da nicht mehr die gesamte Luftmenge bei jedem Prozessumlauf gekühlt und wieder erhitzt werden muss, sondern nur noch der Teil, der durch die Trockenmittelpatrone geleitet wird.
- Bei wasserbetriebenen Kühleinrichtungen erfolgt automatisch eine Anpassung an die Wassertemperatur. Hierdurch wird eine gleichbleibende Trocknung auch bei Änderungen der Außentemperatur gewährleistet.

Anstatt der Trockenmittelpatronen können als Trocknungseinrichtungen auch Trocknungsräder, Kondensat- oder Kältetrockner verwendet werden. Bei Chargenprozessen oder beim Anfahren von kontinuierlichen Trockenprozessen kann das erfindungsgemäße Verfahren dazu genutzt werden, um in der Heizphase das Material mit relativ feuchter Luft aufzuheizen und die Feuchte der Trockenluft danach herunter zu nehmen. Hierdurch wird Energie und Zeit gespart. Die feuchte Luft kann mehr Energie zum Aufheizen transportieren und muss in der Heizphase auch nicht getrocknet werden. Sobald das Material die gewünschte Temperatur erreicht hat, die am Austrittsanschluss des Trockenbehälters gemessen wird, kann der Sollwert der Trockenluftfeuchte gesenkt werden.

Wird bei unbeabsichtigten Unterbrechungen des Nachfüllens von Material der Trockenbehälter zu weit leer gefahren und wird daraufhin eine größere Materialmenge als bei gleichmäßiger Füllung nachgefüllt, so kann eine kurzfristige Senkung der Trockenluftfeuchte dazu beitragen, die Auswirkungen der Störung zu vermindern und den Trocknungsprozess zu stabilisieren.

Ausführungsbeispiele der Erfindung werden nachstehend anhand von Zeichnungen näher erläutert. Es zeigen
Fig. 1 schematisch eine bekannte Trocknungsanlage,
Fig. 2 eine erste Ausführungsform einer erfindungsgemäßen Trocknungsanlage,
Fig. 3 eine zweite Ausführungsform der erfindungsgemäßen Trocknungsanlage,
Fig. 4 eine dritte Ausführungsform der erfindungsgemäßen Trocknungsanlage,

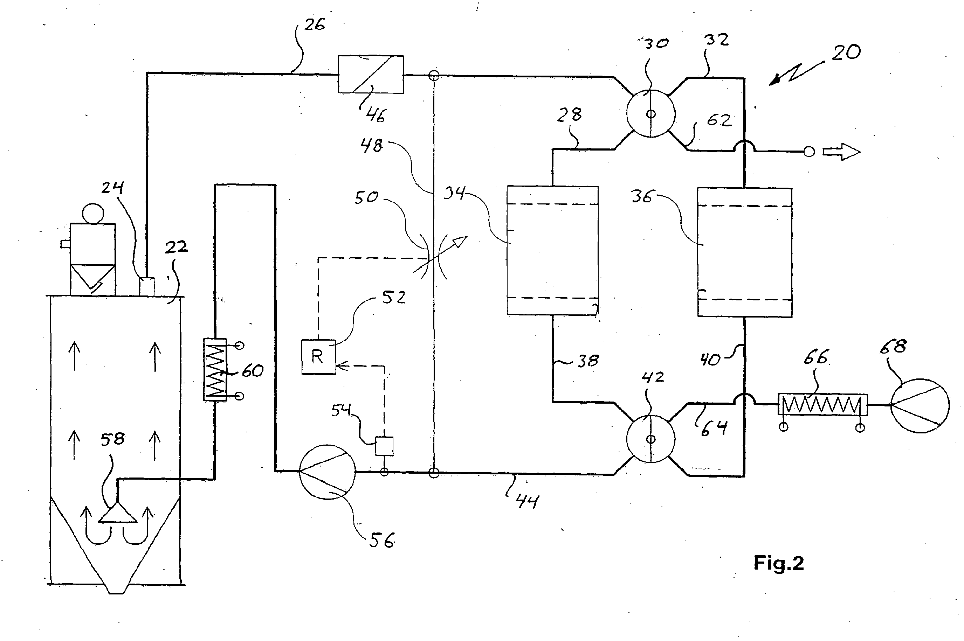

Die in Fig. 2 gezeigte erste Ausführungsform der Trocknungsanlage 20 umfasst einen Behälter 22, der zur Trocknung mit Material, z. B. Kunststoffgranulat gefüllt wird. Das Material in dem Behälter 22 wird von getrockneter Luft von unten nach oben durchströmt, wobei die getrocknete Luft an einem Luftaustritt 58 einer Rücklaufleitung 44 in den Behälter 22 eintritt und oben an einem Abluftstutzen 24 austritt, der mit einer Zulaufleitung 26 verbunden ist. Die Zulaufleitung 26 führt zu einer Umschaltvorrichtung 30, die so umgeschaltet werden kann, dass die durch die Zulaufleitung 26 geführte Luft wahlweise über eine Eintrittsleitung 28 in eine erste Trockenmittelpatrone 34 oder über eine Eintrittsleitung 32 einer zweiten Trockenmittelpatrone 36 zugeführt werden kann. In den Trockenmittelpatronen 34, 36 ist ein Trockenmittel enthalten, z. B. Silokagel oder Zeolithe. Die Luft strömt durch die entsprechende Trockenmittelpatrone 34 bzw. 36 und tritt über Austrittsleitungen 38 bzw. 40 aus, die zu einer zweiten Umschalteinrichtung 42 führen, die entweder die Austrittsleitung 38 oder die Austrittsleitung 40 mit einer Rücklaufleitung 44 verbindet. In der Rücklaufleitung 44 ist ein Hauptgebläse 56 angeordnet, das für die Luftzirkulierung verantwortlich ist. Stromabwärts des Hauptgebläses 56 ist an der Rücklaufleitung 44 eine Heizung 60 vorgesehen, durch die die dem Behälter 22 zugeführte Luft, die über den Austritt 58 eingeführt wird, erwärmt werden kann.

Die Trocknungsanlage 20 weist außerdem eine Regenerationszufuhrteitung 64 auf, die über die Umschaltrichtung 42 mit der Austrittsleitung 40 verbunden wird, wenn die Austrittsleitung 38 mit der Rücklaufleitung 44 verbunden ist. Umgekehrt verbindet die Umschalteinrichtung 42 die Regenerationszuführleitung 64 mit der Austrittsleitung 38, wenn die Austrittsleitung 40 mit der Rücklaufleitung 44 verbunden ist. Die erste Umschalteinrichtung 30 kann die Eintrittsleitungen 28 bzw. 32 wahlweise mit einer Regenerationsluftabfuhrleitung 62 verbinden, die Regenerationsluft an die Umgebung abgibt. Zur Regeneration wird über ein Regenerationsgebläse 68 Regenerationsluft in die Regenerationsleitung 64 eingeführt, die von einer Heizung 66 erhitzt wird.

Stromabwärts des Abluftstutzens 24 ist in der Zulaufleitung 26 eine Kühleinrichtung 46 angeordnet, mit der die Temperatur der Luft in der Zulaufleitung 26 eingestellt werden kann. Die Kühleinrichtung 46 ist beispielsweise ein Wasserkühler bei dem die pro Zeiteinheit durchfließende Wassermenge verstellt werden kann. Hierzu ist entweder ein Proportionalventil vorgesehen oder ein Wasserventil wird getaktet geöffnet. Als Kühleinrichtung können jedoch auch andere Kühlertypen, wie z. B. Kältemaschinen oder Wärmetauscher verwendet werden. Durch Einstellung der Temperatur der Luft in der Zulaufleitung 26 kann die Feuchtigkeit der Luft, die den Trockenmittelpatronen 34, 36 zugeführt wird, eingestellt werden.

Stromabwärts der Kühleinrichtung 46 ist an die Zulaufleitung 26 eine Bypassleitung 48 angeschlossen, die stromabwärts der Umschaltvorrichtung 42 mit der Rücklaufleitung 44 verbunden ist. In der Bypassleitung 48 ist ein Drosselorgan 50 angeordnet, mit dem der Strömungsdurchsatz durch die Bypassleitung 48 eingestellt werden kann. Stromabwärts der Verbindung der Bypassleitung 48 mit der Rücklaufleitung 44 ist stromaufwärts des Hauptgebläses 56 ein Feuchtigkeitssensor 54 angeordnet, mit dem die Feuchtigkeit in der Rücklaufleitung 44 gemessen werden kann. Der von dem Feuchtigkeitssensor 54 gemessene Feuchtigkeitswert wird an eine Regeleinrichtung 52 eingegeben, die abhängig von dem gemessenen Feuchtigkeitswert das Drosselorgan 50 so einstellen kann, dass der gemessene Feuchtigkeits-Ist-Wert auf einen vorgegebenen Feuchtigkeits-Soll-Wert geregelt wird.

Durch die Bypassleitung 48 wird feuchtere Luft stromabwärts der Kühleinrichtung 46 mit durch die Trockenmittelpatronen 34 bzw. 36 getrockneter Luft in der Rücklaufleitung 44 vermischt. Um einen konstanten Feuchtigkeitswert aufrecht zu erhalten, wird mit steigender Feuchtigkeit der die Trockenmittelpatronen 34 bzw. 36 verlassenden Luft weniger feuchtere Luft über die Bypassleitung 48 in die Rücklaufleitung 44 zugeführt. Hierzu steuert die Regeleinrichtung 52 das Drosselorgan 50 entsprechend abhängig von dem durch den Feuchtigkeitssensor 54 gemessenen Ist-Wert.

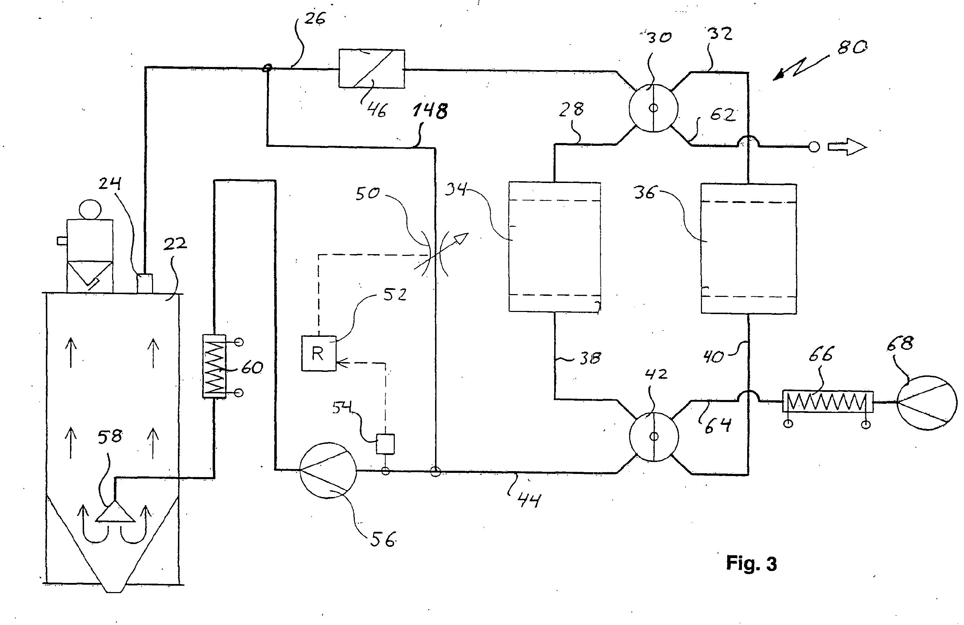

Die in Fig. 3 gezeigte zweite Ausführungsform der erfindungsgemäßen Trocknungsanlage 80 hat im Wesentlichen denselben Aufbau, wie die in Fig. 2 gezeigte Ausführungsform. Gleiche Elemente sind mit gleichen Bezugszeichen bezeichnet. Die zweite Ausführungsform unterscheidet sich von der ersten Ausführungsform dadurch, dass die Bypassleitung 148 vor, d.h. stromaufwärts der Kühleinrichtung 46 mit der Zulaufleitung 26 verbunden ist. Wenn sehr hohe Temperaturen zur Trocknung des Trocknungsgutes erforderlich sind hat diese Ausführungsform den Vorteil, dass weniger Luft auf die zur Trocknung der Luft in den Trockenmittelpatronen 34 bzw. 36 erforderliche Temperatur herabgekühlt werden muss. Hierdurch wird der Wirkungsgrad der Anlage erhöht. Zur Trocknung von PET ist beispielsweise eine Temperatur von ca. 180°C erforderlich, während die optimale Temperatur der den Trockenmittelpatronen 34 bzw. 36 zugeführten Luft ca. 70°C beträgt.

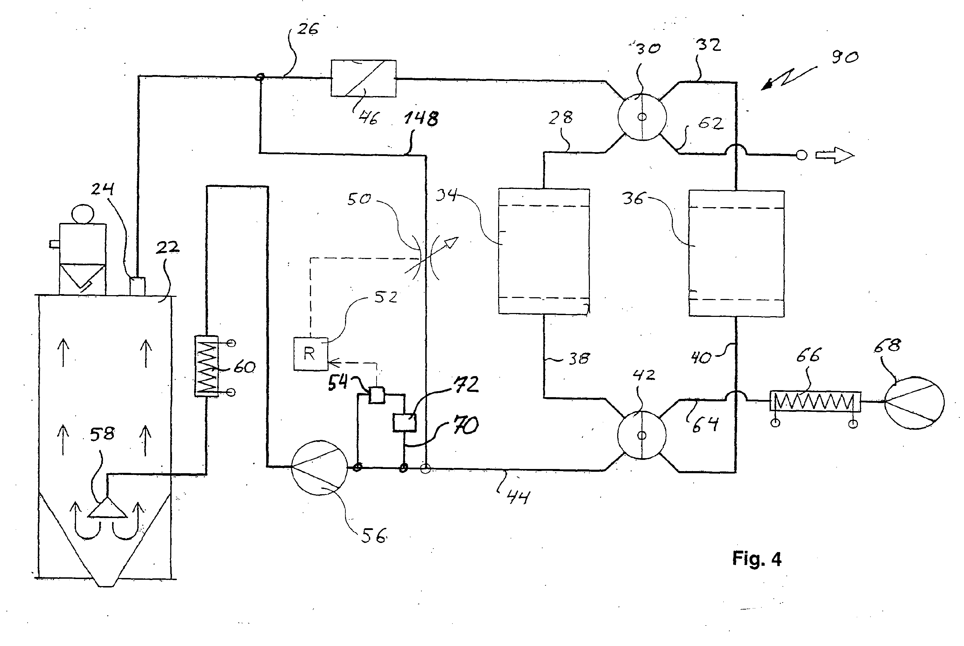

Die in Fig. 4 gezeigte vierte Ausführungsform der erfindungsgemäßen Trocknungsanlage 90 unterscheidet sich von der in Fig. 3 gezeigten Ausführungsform dadurch dass stromabwärts der Verbindung der Bypassleitung 148 mit der Rücklaufleitung 44 eine Messbypassleitung 70 vorgesehen ist, deren beide Enden mit der Rücklaufleitung 44 verbunden sind, wobei an der Messbypassleitung 70 in Strömungsrichtung nacheinander eine Vorkühleinrichtung 72 und der Feuchtigkeitssensor 54 vorgesehen sind. Die Vorkühleinrichtung 72 kann beispielsweise ein Peltierelement umfassen. Durch die Vorkühleinrichtung 72 kann die dem Feuchtigkeitssensor 54 in der Messbypassleitung 70 zugeführte Luft vorgekühlt werden, damit der Feuchtigkeitssensor 54 einwandfrei funktionieren kann.

Beim Betrieb der in den Fig. 2 bis 4 gezeigten Trocknungsanlagen ist es möglich, die jeweiligen Einstellwerte des Drosselorgans 50 dem zeitlichen Ablauf der Trocknung entsprechend in einem Speicher abzulegen. Dies ermöglicht es, bei einem Umschalten zwischen den Trockenmittelpatronen 34 und 36 sofort die optimalen Stellwerte anzufahren, die in dem vorhergegangenen Zyklus eingestellt wurden. Die Regeleinrichtung 52 kann dann die feineren Korrekturen und langsamere Anpassungen übernehmen.

Für den Fall, dass der Feuchtigkeitssensor 54 defekt ist, kann der Trocknungsprozess über die gespeicherten Parameter als Notfallbetrieb zeitgesteuert weiterlaufen.

## Patentansprüche

1. Verfahren zur Trocknung eines Trockenguts, bei dem
- getrocknete Luft durch das Trocknungsgut geleitet wird, wodurch dem Trockengut Feuchtigkeit entzogen wird, die von der durchgeleiteten Luft aufgenommen wird,
- die durchgeleitete Luft einer Trocknungseinrichtung (34, 36) zugeführt und von dieser getrocknet wird,
- die von der Trocknungseinrichtung (34, 36) getrocknete Luft wieder dem Trocknungsgut zugeführt und durch dieses geleitet wird,
**dadurch gekennzeichnet, dass** die Feuchtigkeit der dem Trocknungsgut zugeführten Luft auf einen vorgegeben Sollwert geregelt wird und dass ein Teil der der Trocknungseinrichtung (34, 36) zugeführten Luft abgezweigt und an der Trocknungseinrichtung (34, 36) vorbei geführt wird und anschließend wieder mit der durch die Trocknungseinrichtung (34, 36) getrockneten Luft vereint wird, wobei zur Regelung der Feuchtigkeit der dem Trocknungsgut zugeführten Luft, der Strömungsdurchsatz der abgezweigten Luft gesteuert wird.

2. Verfahren nach Anspruch 1, **dadurch gekennzeichnet, dass** die dem Trocknungsgut zugeführte Luft durch eine Kühleinrichtung (46) gekühlt wird.

3. Verfahren nach Anspruch 2, **dadurch gekennzeichnet, dass** der abgezweigte Teil der der Trocknungseinrichtung (34, 36) zugeführten Luft stromaufwärts der Kühleinrichtung (46) abgezweigt wird.

4. Verfahren nach Anspruch 2, **dadurch gekennzeichnet, dass** der abgezweigte Teil der der Trocknungseinrichtung (34, 36) zugeführten Luft stromabwärts der Kühleinrichtung (46) abgezweigt wird.

5. Verfahren nach einem der vorhergehenden Ansprüche, **dadurch gekennzeichnet, dass** die Feuchtigkeit der dem Trocknungsgut zugeführten Luft einem vorgegebenem Trocknungsverlauf entsprechend geregelt wird

6. Verfahren nach einem der vorhergehenden Ansprüche, **dadurch gekennzeichnet, dass** als Trockeneinrichtung wenigstens eine Trockenmittelpatrone verwendet wird.

7. Verfahren nach einem der vorhergehenden Ansprüche, **dadurch gekennzeichnet, dass** beim Durchlauf eines Trocknungszyklus der zeitliche Zusammenhang zwischen Steuerwerten und Luftfeuchte ermittelt und als Parameter gespeichert wird, und die Regeleinrichtung in weitere Trockenzyklen die Feuchtigkeit auf der Basis der gespeicherten Parameter regelt.

8. Anlage zur Durchführung des Verfahrens nach Anspruch 1, mit
- wenigstes einem Trocknungsgutbehälter (22), der einen Luftaustritt (24) aufweist, der über eine Zulaufleitung (26) mit einem Lufteintritt (28, 32) einer Trocknungseinrichtung (34, 36) verbunden ist, wobei die Trocknungseinrichtung (34, 36) einen Luftaustritt (38, 40) aufweist, der über eine Rücklaufleitung (44) mit einem Lufteintritt (58) des Trocknungsgutbehälters (22) verbunden ist,
- einer Messeinrichtung (54) zur Messung eines Feuchtigkeitswertes in der Rücklaufleitung (44) und
- einer Regeleinrichtung (52) zur Regelung der Feuchtigkeit in der Rücklaufleitung (44) auf einen Soll-Feuchtigkeitswert in Abhängigkeit von dem gemessenen Feuchtigkeitswert wobei die Zulaufleitung (26) mit der Rücklaufleitung (44) über eine Bypassleitung (48, 148) verbunden ist, in der ein Drosselorgan (50) angeordnet, und der Strömungswiderstand des Drosselorgans (50) von der Regeleinrichtung (52) zur Erreichung des Soll-Feuchtigkeitswerts gesteuert wird.

9. Anlage nach Anspruch 8, **dadurch gekennzeichnet, dass** in der Zulaufleitung (26) eine Kühleinrichtung (46) angeordnet ist.

10. Anlage nach Anspruch 9, **dadurch gekennzeichnet, dass** die Bypassleitung (48) stromabwärts der Kühleinrichtung (46) mit der Zulaufleitung (26) verbunden ist.

11. Anlage nach Anspruch 9, **dadurch gekennzeichnet, dass** die Bypassleitung (148) stromaufwärts der Kühleinrichtung (46) mit der Zulaufleitung (26) verbunden ist.

12. Anlage nach einem der Ansprüche 8 bis 11, **dadurch gekennzeichnet, dass** stromabwärts der Verbindung der Bypassleitung (148) mit der Rücklaufleitung (44) eine Messbypassleitung (70) vorgesehen ist, deren beide Enden mit der Rücklaufleitung (44) verbunden sind, wobei an der Messbypassleitung (70) in Strömungsrichtung nacheinander eine Vorkühleinrichtung (72) und die Messeinrichtung (54) vorgesehen sind.

13. Anlage nach einem der Ansprüche 8 bis 12, **dadurch gekennzeichnet, dass** die Trocknungseinrichtung mehrere Trockenmittelpatronen (34, 36) umfasst, wobei eine erste Vorschalteinrichtung (30) vorgesehen ist, die die Trockenmittelpatronen (34, 36) wahlweise mit der Zulaufleitung (26) verbinden kann, und eine zweite Vorschalteinrichtung (42) vorgesehen ist, mit der die mit der Zulaufleitung (26) verbundene Trockenmittelpatrone (34, 36) mit der Rücklaufleitung (44) verbunden wird.

14. Anlage nach Anspruch 13, **dadurch gekennzeichnet, dass** die erste Vorschalteinrichtung (30) so ausgestaltet ist, dass sie eine Trockenmittelpatrone (34, 36), die nicht mit der Zulaufleitung (26) verbunden ist, mit einer Regerationsluftabfuhrleitung (62) verbindet, und eine Trockenmittelpatrone (34, 36), die nicht mit der Rücklaufleitung (44) verbunden ist, mit einer Regerationsluftzufuhrleitung (64) verbindet.
